# EUROPÄISCHE PATENTSCHRIFT

(11) **EP 0 682 402 B1**
(45) Veröffentlichungstag und Bekanntmachung des Hinweises auf die Patenterteilung: **14.01.1998**
(21) Anmeldenummer: 95106489.8
(22) Anmeldetag: 28.04.1995
(51) Int. Cl.: H02M 7/5395

(54) **Einrichtung zur Begrenzung der Änderungsgeschwindigkeit der Ausgangsgrössen eines über einen Gleichspannungszwischenkreis selbstgeführten Umrichters**
Output magnitudes rise limiting device for self-commutated constant voltage intermediate circuit converter
Dispositif pour la limitation de la pente des grandeurs de sortie d'un convertisseur auto-commuté à circuit intermédiaire à tension continue

(30) Priorität: 11.05.1994 CH 1463/94
(43) Veröffentlichungstag der Anmeldung: 15.11.1995
(73) Patentinhaber: SCHAFFNER ELEKTRONIK AG, CH-4708 Luterbach (CH)
(72) Erfinder: Süsse, Heinz, D-59581 Warstein (DE); Stitz, Ullrich, D-59581 Warstein (DE)
(74) Vertreter: Dittrich, Horst, Dr.

(56) Entgegenhaltungen:
- EP-A- 0 473 192
- DE-A- 3 318 480
- DE-A- 4 135 680
- DE-U- 9 307 806
- PATENT ABSTRACTS OF JAPAN vol. 13, no. 295 (E-783) 7. Juli 1989 & JP-A-01 074 070 (MITSUBISHI ELECTRIC) 20. März 1989
- PATENT ABSTRACTS OF JAPAN vol. 12, no. 13 (E-573) 14. Januar 1988 & JP-A-62 171 462 (FUJI ELECTRIC) 28. Juli 1987

## Beschreibung

Die vorliegende Erfindung liegt auf dem Gebiet der Frequenzumrichter oder Wechselrichter, die seit einigen Jahren verstärkt zur Drehzahlregelung von Drehfeldmaschinen eingesetzt werden. Dabei werden vorwiegend sogenannte U-Wechselrichter mit einem Gleichspannungs-Zwischenkreis verwendet. Der letztere bildet aus der normalerweise konstanten Netzspannung eine Gleichspannung. Diese wird im Wechselrichter mittels Leistungshalbleiterschaltern geschaltet, wodurch das gewünschte dreiphasige Drehstromnetz mit veränderlicher Spannung und Frequenz bereitgestellt wird.

Als Leistungshalbleiter werden beispielsweise FET's oder IGBT's (Feldeffekt- bzw. Insulated-Gate-Bipolar-Transistoren) verwendet, also Bauteile, die zur Erzielung eines möglichst hohen Wirkungsgrades sehr schnell und mit sehr steilen Spannungsanstiegszeiten der Impulse arbeiten. Diese an sich vorteilhafte Eigenschaft führt zu folgenden Problemen beim Betrieb dieser Umrichter:
- Unzulässig hohe Beanspruchung der Isolation angeschlossener Drehfeldmaschinen durch sehr steile Spannungsimpulse (du/dt-Belastung): Insbesondere bei kürzeren Anschlusskabeln zu den angeschlossenen Drehfeldmaschinen gelangen sehr steile Spannungsimpulse an deren Wicklungsisolation. Dies führt zu einer ständig sehr hohen Umpolarisation innerhalb der Isolation, die zu Ausfällen aufgrund von Ermüdungserscheinungen der Wicklungsisolation und somit zur Reduzierung der Lebensdauer von Drehfeldmaschinen führt.
- Unzulässig hohe Beanspruchung der Isolation angeschlossener Drehfeldmaschinen durch Überspannungen bei längeren Anschlusskabeln: Je nach Leitungslänge zwischen Umrichter und Drehfeldmaschinen können infolge von Signallaufzeiten und Reflexionen der Impulse Überpannungen auftreten, die mehr als das Doppelte der Zwischenkreisspannung betragen können. dies führt ebenfalls zu einer unzulässigen Belastung der Wicklungsisolation, die die Lebensdauer eines Antriebs erheblich reduzieren kann.
- Unzulässige Beeinflussung oder Funktionsbeeinträchtigung benachbarter Baugruppen oder von zum Verbindungskabel zwischen Umrichter und Drehmaschinen parallel geführten Kabeln: Bedingt durch die physikalische Arbeitsweise der Umrichter, d. h. durch die sehr kurzen Spannungsanstiegs- und -abfallzeiten der Impulse, können über die kapazitive und induktive Kopplung sowie über Abstrahlung Beeinflussungen, insbesondere Fehlfunktionen oder Ausfälle, benachbarter elektrischer Baugruppen oder Geräte auftreten. Die vom Umrichter erzeugten Spannungsimpulse wirken nicht nur zwischen den angeschlossenen Leitungsadern (symmetrische Spannungen), sondern es treten auch Spannungssprünge gegenüber dem Erdpotential auf (unsymmetrische oder asymmetrische Störspannungen). Dies führt zu parasitären Störströmen im Erdungssystem, welche bei einem schlecht ausgeführten Erdungssystem benachbarte Baugruppen oder Kabel störend beeinflussen können.

Häufig werden zur Erfüllung der Normen bezüglich Störfestigkeit und Funkentstörung zwischen Umrichter und Drehmaschinen geschirmte Verbindungskabel eingesetzt, durch welche die kapazitive Kopplung und damit die Beeinflussbarkeit benachbarter Kabel und Baugruppen reduziert werden soll. Dabei treten aber infolge der Koppelkapazität der geschirmten Verbindungskabel, das ist die Kapazität zwischen Einzeladern und Schirm, hochfrequente Ströme auf, welche im Kabelschirm fliessen und über magnetische Kopplung Störströme in benachbarten Kabeln induzieren, was zu Beeinflussungen führen kann. Ausserdem kann sich aufgrund der hochfrequenten Ströme und der Länge des Kabels ein Teil der vorhandenen Störenergie in Form von Abstrahlung vom Kabel lösen und benachbarte Baugruppen und Geräte unzulässig beeinflussen. Dieser Effekt tritt natürlich auch bei ungeschirmten Kabeln auf.
- Unzulässige Beanspruchung der Leistungshalbleiter im Umrichter durch die ausgangsseitig angeschlossenen Leitungen zu den Drehfeldmaschinen: Bei längeren Verbindungskabeln zwischen Umrichter und Drehmaschinen werden die Leistungshalbleiter durch die Kabelkapazität zusätzlich mit Auf- und Entladeströmen belastet, welche der Umrichter zusätzlich zu den erforderlichen Betriebsströmen der Drehmaschinen liefern muss. Diese zusätzliche Belastung steigt umso mehr, je höher die Schaltfrequenz des Umrichters gewählt wird. Da heutige Umrichter zumeist kurzschlussfest sind oder zumindest über eine Stromregelung verfügen, muss für Anwendungen mit längeren Verbindungskabeln ein Umrichter gewählt werden, der diesen zusätzlichen symmetrischen Strom zwischen den Leitungen ungefährdet verarbeiten kann. Das bedeutet für den Anwender, dass er eventuell einen erheblich leistungsstärkeren und teureren Umrichter verwenden muss.

Bei geschirmten Verbindungskabeln kommt es schon bei mittleren Kabellängen zu unzulässigen Belastungen der Leistungshalbleiter, indem durch die Koppelkapazität des Kabelschirms unsymmetrische Ströme auftreten, welche die Leistungshalbleiter zusätzlich belasten.

Die Erfindung betrifft nun eine Einrichtung zur Begrenzung der Änderungsgeschwindigkeit der Ausgangsgrössen eines über einen Gleichspannungs-Zwischenkreis selbstgeführten Umrichters, welcher Ausgangsklemmen für den Anschluss von mindestens einer Drehfeldmaschine sowie einen zwischen jeder Ausgangsklemme und der mindestens einen Drehfeldmaschine angeordneten LC-Tiefpass aufweist.

Bei einer aus der DE-A-41 35 680 bekannten Einrichtung dieser Art enthält der Tiefpass als Induktivitäten sogenannte Stromanstiegsbegrenzungsdrosseln, denen drei Zweige mit je zwei Dioden nachgeschaltet sind. Die Stromanstiegsbegrenzungsdrosseln sind jeweils an das den Kathodenanschluss der einen Diode mit dem Anodenanschluss der anderen Diode eines Diodenzweigs verbindende Leitungsstück angeschlossen. Diese bekannte Einrichtung kann zwar einige der vorstehend aufgezählten Probleme, insbesondere die Beanspruchung der Isolation der angeschlossenen Drehfeldmaschinen durch steile Spannungsimpulse oder die Beanspruchung der Leistungshalbleiter durch die Verbindungskabel, merklich reduzieren, sie ist aber hinsichlich anderer Probleme praktisch unwirksam. Dies hängt damit zusammen, dass diese Einrichtung im wesentlichen nur auf die symmetrischen Spannungen, also auf die Spannungen zwischen den spannungsführenden Leitungen, wirkt und die unsymmetrischen Spannungen praktisch nicht beeinflusst.

Aus der DE-U-93 07 806.4 ist ein Ausgangsfilter für einen Umrichter bekannt, das im wesentlichen aus einer Kombination von Dioden, Widerständen und Induktivitäten besteht.

Durch die Erfindung soll eine Einrichtung der genannten Art angegeben werden, die sowohl auf symmetrische als auch auf unsymmetrische Störspannungen wirkt und dadurch die eingangs genannten Probleme beseitigt oder zumindest ganz wesentlich reduziert.

Die erfindungsgemässe Lösung dieser Aufgabe ist dadurch gekennzeichnet, dass der LC-Tiefpass als verlustbehafteter Tiefpass ausgebildet ist und entsprechende Widerstände aufweist, und dass zwischen jeder Ausgangsklemme und der mindestens einen Drehfeldmaschine eine durch eine stromkompensierte Drossel gebildete zusätzliche Induktivität angeordnet ist.

Die erfindungsgemässe Einrichtung reduziert die Anstiegs- und Abfallflanken der vom Umrichter erzeugten Spannungsimpulse,wodurch die Probleme mit der Beanspruchung der Isolation der Drehfeldmaschinen auf ein sinnvolles Mass reduziert werden. Gleichzeitig wirkt sie auf die unsymmetrischen Spannungen gegenüber dem Erdpotential, wodurch auch die durch diese unsymmetrischen Spannungen verursachten Störungen ausgeschaltet oder zumindest weitgehend reduziert werden.

Im folgenden wird die Erfindung anhand von Ausführungsbeispielen und der Zeichnungen näher erläutert; dabei zeigt:
- Fig. 1: eine Einrichtung zur Begrenzung der Änderungsgeschwindigkeit der Ausgangsspannung bei selbstgeführten Umrichtern mit einem verlustbehafteten Tiefpass; und
- Fig. 2 - 4: je ein Ausführungsbeispiel einer erfindungsgemässen Verbesserung der Einrichtung von Fig. 1.

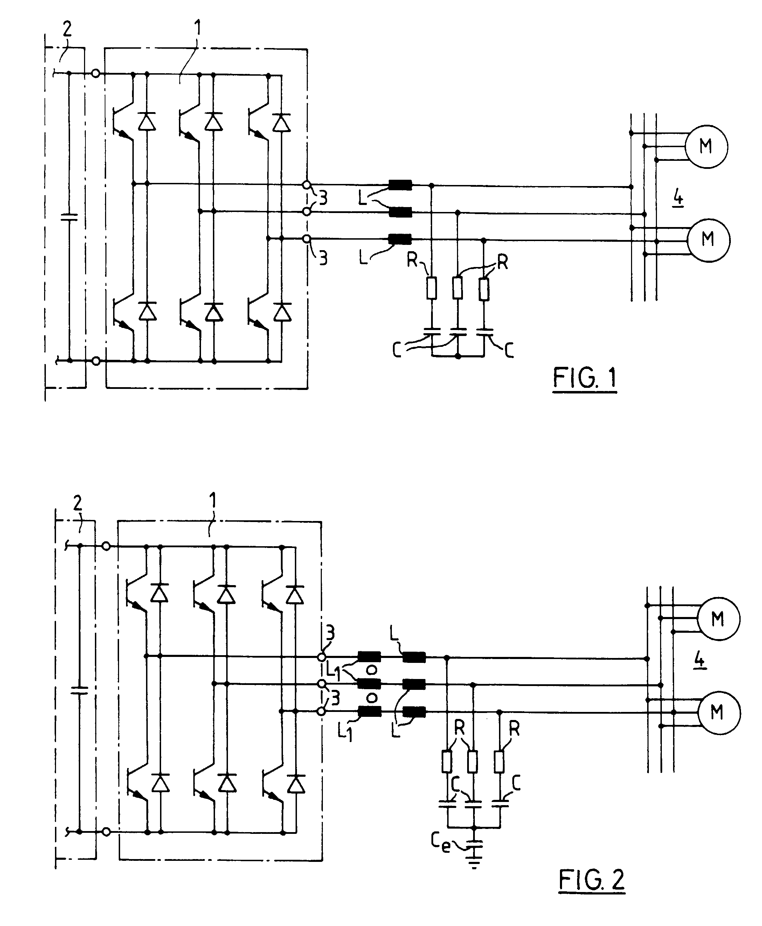

Fig. 1 zeigt einen zur Drehzahlregelung von Drehfeldmaschinen vorgesehenen Wechselrichter oder Frequenzumrichter 1, der an einen durch einen Kondensator symbolisierten Gleichspannungs-Zwischenkreis 2 angeschlossen ist. Dieser ist durch einen an das Versorgungsnetz mit üblicherweise konstanter Spannung und konstanter Frequenz angeschlossenen Netzgleichrichter (nicht dargestellt) gespeist. Der Umrichter 1 schaltet die Gleichspannung des Gleichspannungs-Zwischenkreises 2 mittels Leistungshalbleiterschaltern und stellt an seinen Ausgangsklemmen 3 für die angeschlossenen Drehfeldmaschinen 4 (z.B. Motoren M) das gewünschte dreiphasige Drehstromnetz mit veränderlicher Frequenz und Spannung bereit. Wenn in dieser Beschreibung von Drehfeldmaschinen oder von Drehfeldmaschine die Rede ist, dann ist immer beides, sowohl eine einzelne Maschine als auch eine Maschinengruppe, gemeint.

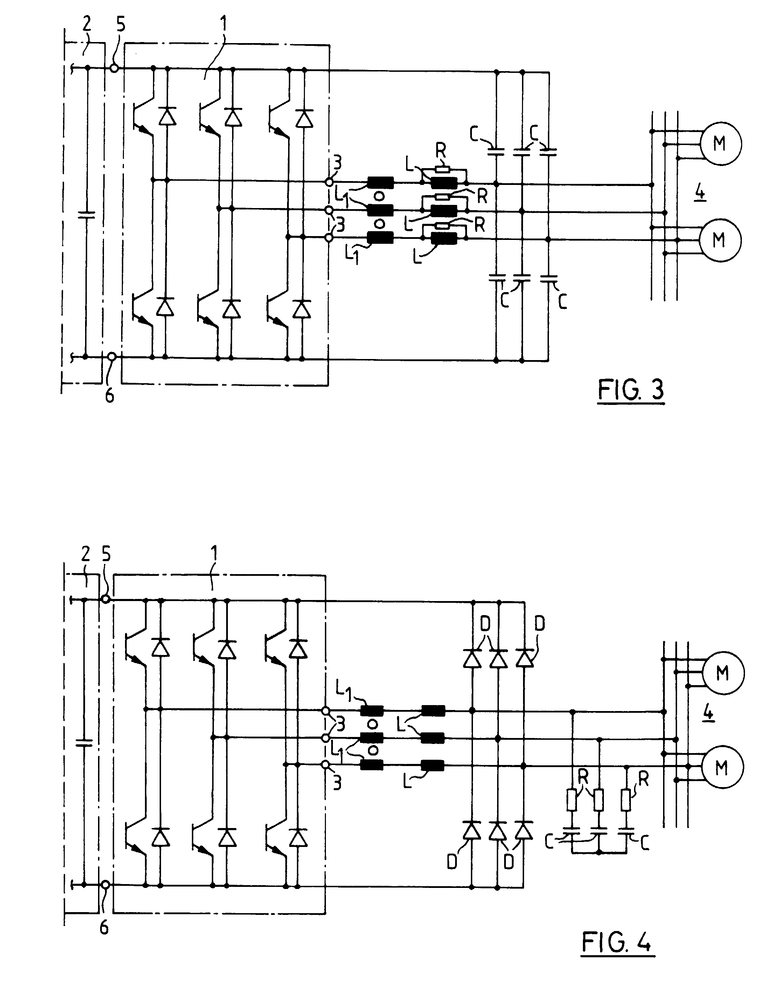

Als Leistungshalbleiterschalter werden beispielsweise FET's oder IGBT's verwendet, die sehr schnell und mit sehr steilen Anstiegsflanken der Impulse arbeiten. Dadurch werden zwar die Verluste im Umrichter 1 möglichst gering gehalten, so dass mit einem sehr hohen Wirkungsgrad gearbeitet werden kann, es ergeben sich aber die vorne in der Beschreibungseinleitung aufgezählten nachteiligen Probleme. Ein Teil lässt sich durch das Einfügen eines verlustbehafteten LC-Tiefpasses mit Induktivitäten L, Kapazitäten C und Widerständen R in das Verbindungskabel zwischen den Ausgangsklemmen 3 des Umrichters 1 und den Drehfeldmaschinen 4 eliminieren. Dabei können die Kapazitäten C sowohl in Y- als auch in Δ-Form geschaltet sein; das gilt auch für die in den Fig. 2 und 4 dargestellten Ausführungsbeispiele.

Der Tiefpass ermöglicht eine Reduzierung der Anstiegs- und Abfallzeiten der einzelnen Rechteck-Spannungsimpulse, mit denen die Drehfeldmaschinen 4 gespeist werden. Bedingt durch die Bemessung des Tiefpasses ergeben sich hierbei mehr oder weniger starke Überschwinger der Spannungsimpulse. Die in der Figur dargestellte Schaltung, die auf die symmetrischen Spannungen zwischen den spannungsführenden Leitungen wirkt, wird speziell dann angewendet, wenn eine hohe Dynamik des Antriebs erforderlich ist und zusätzliche Spannungsabfälle an der Drossel L wegen ihrer die Ausgangsleistung für den Antrieb reduzierenden Wirkung unerwünscht sind. Die Drossel wird also zur Begrenzung des Spannungsabfalls eine entsprechend relativ geringe Induktivität aufweisen müssen.

Die durch Potentialsprünge am Ausgang des Umrichters 1 erzeugten unsymmetrischen Spannungen gegenüber dem Erdpotential bleiben bei der dargestellten Schaltung weitestgehend erhalten. Man könnte zwar theoretisch mit relativ hohen Induktivitätswerten die Spannungsanstiegszeiten wesentlich verlängern, was aber die Verwendung voluminöser und teurer Induktivitäten erfordern würde. Ausserdem würde durch den Einsatz grosser Induktivitäten an diesen ein relativ grosser Spannungsabfall hervorgerufen, der seinerseits die für die Drehfeldmaschine zur Verfügung stehende Spannung und damit deren Antriebsleistung reduzieren würde.

Fig. 2 zeigt eine Variante, die alle vorne diskutierten nachteiligen Eigenschaften der bekannten Umrichter weitgehend beseitigt. Darstellungsgemäss ist zwischen jede Ausgangsklemme 3 und die Drehfeldmaschine 4 eine stromkompensierte Drossel L₁ eingefügt. Ausserdem ist der Sternpunkt, zu dem die Kondensatoren C zusammengeführt sind, über eine weitere Kapazität Cₑ mit dem Erdpotential verbunden. Mit dieser Schaltung können die unsymmetrischen Spannungen gegenüber dem Erdpotential weitestgehend reduziert werden. Bei längeren Verbindungsleitungen zwischen Umrichter 1 und Drehfeldmaschine 4 kann die Kapazität Cₑ weggelassen werden, da dann die längeren Kabel eine entsprechend höhere Kapazität aufweisen.

Stromkompensierte Drosseln sind so ausgebildet, dass bei normalem Betriebsstrom (Motorstrom) die im Kern erzeugten magnetischen Flüsse sich gegenseitig aufheben und die Induktivitäten praktisch wirkungslos sind. Fliessen jedoch unsymmetrische Ströme gegenüber Erdpotential ab oder an den Gleichspannungs-Zwischenkreis 2 zurück, so ist die Summe der gesamten Ströme ungleich, und die magnetischen Ströme heben sich nicht mehr auf. Ein besonderer Vorteil dieser strompompensierten Drosseln liegt darin, dass bei relativ kleinem Bauvolumen hohe Induktivitätswerte erreicht werden können, wobei selbstverständlich die Grösse der Induktivität auf die auftretenden unsymmetrischen Ströme ausgelegt sein muss. Da diese stromkompensierten Drosseln für den normalen Betriebsstrom nur vernachlässigbar geringe Spannungsabfälle erzeugen, kann durch geeignete Dimensionierung des jeweiligen Tiefpasses eine für alle aufgezählten nachteiligen Probleme wirksame kompakte Einrichtung erstellt werden.

Bei der in Fig. 3 dargestellten Variante der Einrichtung von Fig. 2 sind die für den verlustbehafteten Tiefpass erforderlichen Widerstände R nicht in Reihe mit den Kapazitäten C sondern parallel zu den Drosseln L geschaltet. Ausserdem unterscheidet sich die Anordnung der Kapazitäten C von derjenigen von Fig. 2. Darstellungsgemäss ist den beiden Induktivitäten L und L₁ ein Kapazitätsnetzwerk mit drei Zweigen nachgeschaltet, von denen jeder aus zwei in Reihe geschalteten Kondensatoren C besteht. Jede der spannungsführenden Leitungen zwischen den Induktivitäten L, L₁ und der Drehfeldmaschine 4 ist an den Mittelpunkt eines der Zweige des Kapazitätsnetzwerks geführt. Die Anschlussenden der Zweige des Kapazitätsnetzwerks sind auf den Plus- oder den Minusanschluss 5 bzw. 6 des Gleichspannungs-Zwischenkreises 2 geführt.

Bei dem in Fig. 4 dargestellten Ausführungsbeispiel sind im Unterschied zum Ausführungsbeispiel von Fig. 2 in die Verbindung zwischen den Ausgangsklemmen 3 des Umrichters 1 und der Drehfeldmaschine 4 zusätzliche Begrenzungsdioden D, sogenannte Clamping Dioden, geschaltet, welche eventuell vorhandene Überspannungen auf den Leitungen begrenzen. Ohne Einbau der stromkompensierten Drosseln L₁ in die Schaltung könnten in den Dioden D bei Verwendung von Drosseln L mit einer relativ kleinen Induktivität durch unsymmetrische Spannungen sehr hohe Schaltströme und damit auch hohe Verlustleistungen erzeugt werden. Die stromkompensierten Drosseln L₁ reduzieren hier zusätzlich zu den Anstiegs- und Abfallzeiten der unsymmetrischen Spannungen auch die Schaltströme in den Dioden D und machen somit deren Verwendung erst möglich.

## Patentansprüche

1. Schaltungsanordnung zur Begrenzung der Änderungsgeschwindigkeit der Ausgangsgrössen eines über einen Gleichspannungs-Zwischenkreis selbstgeführten mehrphasigen Umrichters in Brüchenschaltung welcher Ausgangsklemmen für den Anschluss von mindestens einer Drehfeldmaschine sowie einen zwischen jeder Ausgangsklemme und der mindestens einen Drehfeldmaschine angeordneten LC-Tiefpass aufweist, dadurch gekennzeichnet, dass der LC-Tiefpass als verlustbehafteter Tiefpass ausgebildet ist und entsprechende Widerstände (R) aufweist, und dass zwischen jeder Ausgangsklemme (3) und der mindestens einen Drehfeldmaschine (4) eine durch eine stromkompensierte Drossel (L₁) gebildete zusätzliche Induktivität vorgesehen ist.

2. Anordnung nach Anspruch 1, dadurch gekennzeichnet, dass die Drossel (L) des LC-Tiefpasses und die stromkompensierte Drossel (L₁) in Reihe geschaltet sind, wobei die Reihenfolge beliebig ist.

3. Anordnung nach Anspruch 2, dadurch gekennzeichnet, dass von jeder spannungsführenden Leitung zwischen den Drosseln (L, L₁) und der mindestens einen Drehfeldmaschine (4) ein Zweig mit einer Reihenschaltung eines Kondensators (C) und eines Widerstandes (R) des verlustbehafteten LC-Tiefpasses abzweigt, und dass die Zweige an ihrem anderen Ende auf einen Sternpunkt zusammengeführt sind.

4. Anordnung nach Anspruch 3, dadurch gekennzeichnet, dass der Sternpunkt über einen weiteren Kondensator (Cₑ) mit dem Erdpotential verbunden ist.

5. Anordnung nach Anspruch 3, dadurch gekennzeichnet, dass in die Verbindung zwischen den Anschlussklemmen (3) des Umrichters (1) und der mindestens einen Drehfeldmaschine (4) eine Diodenbrüchenschaltung mit Anschluß an den Gleichspannungszwischenkreis zur Begrenzung von Überspannungen geschaltet ist.

6. Anordnung nach Anspruch 3 oder 5, dadurch gekennzeichnet, dass die Kondensatoren (C) des LC-Tiefpasses in Stern oder in Dreieck geschaltet sind.

7. Anordnung nach Anspruch 2, dadurch gekennzeichnet, dass die Widerstände (R) des verlustbehafteten LC-Tiefpasses parallel zu dessen Drosseln (L) geschaltet sind, und dass jede spannungsführende Leitung zwischen den Drosseln (L, L₁) und der mindestens einen Drehfeldmaschine (4) an den Mittelpunkt eines zwei in Reihe geschaltete Kondensatoren (C) enthaltenden Zweiges geführt ist.

## Claims

1. Circuit arrangement for limiting the rate of change of the output variables of a polyphase converter self-commutated via a direct-voltage intermediate circuit in a bridge circuit, which converter has output terminals for the connection of at least one polyphase machine and also a LC low-pass filter disposed between each output terminal and the at least one polyphase machine, characterized in that the LC low-pass filter is designed as a dissipative low-pass filter and has suitable resistors (R) and in that an additional inductance formed by a current-compensated choke (L₁) is provided between each output terminal (3) and the at least one polyphase machine (4).

2. Arrangement according to Claim 1, characterized in that the choke (L) of the LC low-pass filter and the current-compensated choke (L₁) are connected in series, the sequence being as desired.

3. Arrangement according to Claim 2, characterized in that a branch having a series connection of a capacitor (C) and a resistor (R) of the dissipative LC low-pass filter branches off from each voltage-carrying line between the chokes (L, L₁) and the at least one polyphase machine (4), and in that the branches are brought together at a star point at their other end.

4. Arrangement according to Claim 3, characterized in that the star point is connected to earth potential via a further capacitor (Cₑ).

5. Arrangement according to Claim 3, characterized in that a diode bridge circuit having connection to the direct-voltage intermediate circuit for limiting overvoltages is connected in the connection between the connecting terminals (3) of the converter (1) and the at least one polyphase machine (4).

6. Arrangement according to Claim 3 or 5, characterized in that the capacitors (C) of the LC low-pass filter are starconnected or delta-connected.

7. Arrangement according to Claim 2, characterized in that the resistors (R) of the dissipative LC low-pass filter are connected in parallel with its chokes (L) and in that each voltage-carrying line is fed to the centre point of a branch containing two series-connected capacitors (C) between the chokes (L, L₁) and the at least one polyphase machine (4).

## Revendications

1. Dispositif pour la limitation de la pente des grandeurs de sortie d'un convertisseur, polyphasé, auto-commuté par l'intermédiaire d'un circuit intermédiaire à tension continue, en montage en pont, qui comporte des bornes de sortie pour le raccordement d'au moins un générateur à induction ainsi qu'un filtre passe-bas LC prévu entre chaque borne de sortie et le au moins un générateur à induction, caractérisé par le fait que le filtre passe-bas LC est construit comme un filtre passe-bas à pertes et comporte des résistances (R) en conséquence, et qu'une inductance supplémentaire formée par une bobine de self (L₁) à compensation de courant est prévue entre chaque borne de sortie (3) et le au moins un générateur à induction (4).

2. Dispositif selon la revendication 1, caractérisé par le fait que la bobine de self (L) du filtre passe-bas LC et la bobine de self (L₁) à compensation de courant sont branchées en série, dans n'importe quel ordre.

3. Dispositif selon la revendication 2, caractérisé par le fait qu'une branche comportant un circuit série composé d'un condensateur (C) et d'une résistance (R) du filtre passe-bas LC à pertes part de chaque conducteur conduisant la tension entre les bobines de self (L, L₁) et le au moins un générateur à induction (4), et que les branches se réunissent par leur autre extrémité à un point neutre.

4. Dispositif selon la revendication 3, caractérisé par le fait que le point neutre est relié à la terre par l'intermédiaire d'un autre condensateur (Cₑ).

5. Dispositif selon la revendication 3, caractérisé par le fait qu'un montage en pont de diodes comportant un raccordement au circuit intermédiaire à tension continue et destiné à limiter des surtensions est branché dans la liaison entre les bornes de sortie (3) du convertisseur (1) et le au moins un générateur à induction (4).

6. Dispositif selon la revendication 3 ou 5, caractérisé par le fait que les condensateurs (C) du filtre passe-bas LC sont branchés en étoile ou en triangle.

7. Dispositif selon la revendication 2, caractérisé par le fait que les résistances (R) du filtre passe-bas LC à pertes sont branchées en parallèle avec leurs bobines de self (L), et que chaque conducteur conduisant la tension entre leurs bobines (L, L₁) et le au moins un générateur à induction (4) va au point médian d'une branche contenant deux condensateurs (C) branchés en série.
